# FASCICULE DE BREVET EUROPEEN

(11) **EP 2 513 427 B1**
(45) Date de publication et mention de la délivrance du brevet: **07.02.2018**
(21) Numéro de dépôt: 10801650.2
(22) Date de dépôt: 10.12.2010
(51) Int. Cl.: F01D 5/28

(54) **AUBE DE TURBOMACHINE EN MATERIAU COMPOSITE ET PROCÉDÉ POUR SA FABRICATION**
TURBINENMOTOR-ROTORBLATT AUS VERBUNDWERKSTOFF UND HERSTELLUNGSVERFAHREN DAFÜR
COMPOSITE MATERIAL TURBINE ENGINE BLADE AND METHOD FOR MANUFACTURING SAME

(30) Priorité: 14.12.2009 FR 0958931
(43) Date de publication de la demande: 24.10.2012
(73) Titulaire: SNECMA, 75015 Paris (FR); HERAKLES, 33185 Le Haillan (FR)
(72) Inventeur: NUNEZ, Romain, F-33127 Martignas Sur Jalle (FR); BLANCHARD, Stéphane, F-77590 Chartrettes (FR); RENON, Guillaume, F-77000 Vaux Le Penil (FR); COUPE, Dominique, F-33185 Le Haillan (FR); ROUSSILLE, Clément, F-33200 Bordeaux (FR)
(74) Mandataire: Boura, Olivier
(86) Numéro de dépôt international: PCT/FR2010/052666
(87) Numéro de publication internationale: WO 2011/080443

(56) Documents cités:
- EP-A1- 1 526 285
- WO-A1-2005/011962
- JP-A- 2003 148 105
- US-A- 3 632 460
- US-A- 5 854 154
- MOURITZ A P ET AL: "Review of applications for advanced three-dimensional fibre textile composites", COMPOSITES PART A: APPLIED SCIENCE AND MANUFACTURING, ELSEVIER SCIENCE PUBLISHERS B.V., AMSTERDAM, NL LNKD- DOI:10.1016/S1359-835X(99)00034-2, vol. 30, no. 12, 1 décembre 1999 (1999-12-01), pages 1445-1461, XP004362724, ISSN: 1359-835X

## Description

### Arrière-plan de l'invention

L'invention concerne des aubes de turbomachine en matériau composite comportant un renfort fibreux densifié par une matrice.

Le domaine visé est celui d'aubes de turbines à gaz pour moteurs aéronautiques ou turbines industrielles.

La réalisation d'aubes en matériau composite pour des turbomachines a déjà été proposée. On se référera notamment aux demandes de brevet FR 2,939,129 et FR 2,939,130 déposées conjointement par Snecma et Snecma Propulsion Solide. Ces demandes décrivent notamment la fabrication d'une aube de turbomachine en matériau composite comprenant un renfort fibreux densifié par une matrice. De façon plus précise, le procédé décrit dans ces deux documents et appliqué à la fabrication d'une aube présente la particularité que l'ébauche fibreuse réalisée par tissage tridimensionnel est mise en forme pour obtenir une préforme fibreuse en une seule pièce ayant une première partie formant préforme de pale et pied d'aube et au moins une deuxième partie formant préforme de plateforme ou talon d'aube. Ainsi, après densification de la préforme, il est possible d'obtenir une aube en matériau composite ayant un renfort fibreux constitué par la préforme et densifié par la matrice, et formant une seule pièce avec plateforme et/ou talon intégrés.

L'aube obtenue par un tel procédé présente l'inconvénient que son talon ne peut pas intégrer à la fois une fonction d'étanchéité avec le carter qui entoure les aubes (par la présence de léchettes) et une fonction aérodynamique (par la présence de becquets de recouvrement délimitant à l'extérieur la veine d'écoulement du flux gazeux dans la turbine). Par ailleurs, au niveau de son pied, les becquets de la plateforme de l'aube obtenue par ce procédé peuvent rompre sous l'effet de l'effort important auquel ils sont soumis en fonctionnement (cet effort étant du à la force centrifuge de rotation).

Dans les documents US 5,854,154 et US 3,632,460, la fabrication des aubes de turbomachine en matériau composite est décrite.

### Objet et résumé de l'invention

La présente invention a donc pour but principal de pallier de tels inconvénients en proposant une aube en matériau composite formant une seule pièce avec plateforme et/ou talon intégrés et dont le talon et la plateforme présentent les propriétés requises.

Ce but est atteint grâce à un procédé, selon la revendication 1, de fabrication d'une aube de turbomachine en matériau composite comprenant un renfort fibreux densifié par une matrice, le procédé comprenant :
- la réalisation par tissage tridimensionnel d'une ébauche fibreuse en une seule pièce,
- la mise en forme de l'ébauche fibreuse pour obtenir une préforme fibreuse en une seule pièce ayant une première partie formant préforme de pale et pied d'aube, au moins une deuxième partie formant préforme de plateforme d'aube ou préforme de léchettes de talon d'aube, et au moins une troisième partie formant préforme de renfort de plateforme d'aube ou préforme de becquets de recouvrement de talon d'aube, et
- la densification de la préforme fibreuse par une matrice pour obtenir une aube en matériau composite ayant un renfort fibreux constitué par la préforme et densifié par la matrice, et formant une seule pièce avec plateforme et/ou talon intégrés.

Par rapport au procédé décrit dans la demande de brevet FR 2,939,129 et dans la demande de brevet FR 2,939,130 dans son application à la fabrication d'une aube, l'invention prévoit notamment d'utiliser au cours de la mise en forme de l'ébauche fibreuse une troisième partie formant préforme de renfort de plateforme d'aube ou préforme de becquets de recouvrement de talon d'aube. De la sorte, l'aube obtenue par le procédé selon l'invention peut présenter les propriétés requises, à savoir une fonction d'étanchéité et une fonction aérodynamique au niveau de son talon, et une plateforme ayant une double épaisseur qui renforce sa tenue mécanique.

De plus, lorsque la troisième partie de la préforme fibreuse est utilisée pour former une préforme de becquets de recouvrement de talon d'aube, l'aube obtenue par le procédé selon l'invention permet de reconstituer partiellement à l'intérieur (par la plateforme d'aube) et à l'extérieur (par les becquets de talon d'aube) la veine d'écoulement du flux gazeux traversant la turbine dans laquelle l'aube est montée.

Selon une particularité avantageuse du procédé, dans la direction longitudinale correspondant à la direction longitudinale de l'ébauche fibreuse à fabriquer, l'ébauche fibreuse comprend un premier ensemble de plusieurs couches de fils qui sont liées entre elles pour former une première partie de l'ébauche correspondant à la préforme de pale et pied d'aube, un deuxième ensemble de plusieurs couches de fils qui sont liées entre elles au moins localement pour former au moins une deuxième partie de l'ébauche correspondant à la préforme de plateforme d'aube ou à la préforme de léchettes de talon d'aube, et un troisième ensemble de plusieurs couches de fils qui sont liées entre elles au moins localement pour former au moins une troisième partie de l'ébauche correspondant à la préforme de renfort de plateforme d'aube ou à la préforme de becquets de recouvrement de talon d'aube, les fils du premier ensemble de couches de fils n'étant pas liés aux fils du deuxième et du troisième ensembles de couches de fils, et le premier ensemble de couches de fils étant traversé par des fils du deuxième et du troisième ensembles de couches de fils au niveau de la ou de chaque deuxième partie de l'ébauche fibreuse et au niveau de la ou de chaque troisième partie de l'ébauche fibreuse.

L'aménagement de zones de déliaison permet une mise en forme de la préforme fibreuse sans coupe de fils de liage, une telle coupe pouvant amoindrir la tenue mécanique du renfort fibreux, donc de l'aube fabriquée.

Selon une autre particularité du procédé, l'ébauche fibreuse est tissée avec un deuxième ensemble et un troisième ensembles continus de couches de fils et la mise en forme de l'ébauche fibreuse comprend l'élimination par découpe de parties du deuxième et du troisième ensembles de couches de fils extérieures à la ou à chaque deuxième partie de l'ébauche fibreuse et à la ou à chaque troisième partie de l'ébauche fibreuse.

Les deuxième et le troisième ensembles de couches de fils peuvent traverser le premier ensemble de couches de fils dans le même sens. Alternativement, les deuxième et le troisième ensembles de couches de fils peuvent traverser le premier ensemble de couches de fils en sens opposés.

Selon encore une autre particularité du procédé, dans la première partie de l'ébauche fibreuse et dans une direction correspondant à celle s'étendant le long du profil d'une pale d'épaisseur variable dans l'aube à fabriquer, le nombre de couches de fils en direction longitudinale dans le premier ensemble de couches de fils est constant. Les fils du premier ensemble de fils peuvent alors être de titre et/ou de contexture variable.

Avantageusement, l'on réalise par tissage tridimensionnel une bande comprenant une succession d'ébauches fibreuses. Celles-ci peuvent ensuite être découpées dans la bande. Les ébauches peuvent être tissées avec la direction longitudinale de l'aube à fabriquer en sens trame ou en sens chaîne.

L'invention concerne également une aube de turbomachine selon la revendication 12 en matériau composite comprenant un renfort fibreux obtenu par tissage tridimensionnel de fils et densifié par une matrice, l'aube comprenant une première partie constitutive de pale et pied d'aube formant une seule pièce avec au moins une deuxième partie constitutive d'une plateforme ou de léchettes de talon d'aube, et avec au moins une troisième partie constitutive de renfort de plateforme ou de préforme de becquets de recouvrement de talon d'aube, les parties de renfort fibreux correspondant à la première, la deuxième et la troisième parties de l'aube étant au moins en partie mutuellement imbriquées, avec des fils de la première partie de renfort fibreux pénétrant dans la deuxième partie de renfort fibreux.

L'aube peut être en un matériau composite à matrice céramique.

Selon une particularité de l'aube, des fils constitutifs de la partie du renfort fibreux correspondant aux deuxième et troisième parties de l'aube traversent la partie du renfort fibreux correspondant à la première partie de l'aube.

La pale de l'aube peut avoir un profil d'épaisseur variable le long duquel la partie de renfort fibreux correspondant à la première partie de l'aube a, dans la direction longitudinale de l'aube, un nombre constant de couches de fils ayant un titre et/ou une contexture variable, ou un nombre variable de couches de fils.

L'invention vise encore turbomachine équipée d'au moins une aube telle que définie précédemment.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue en perspective d'une aube de turbomachine à plateforme et talon intégrés ;
- la figure 2 illustre de façon très schématique un exemple de disposition de trois ensembles de couches de fils dans une ébauche fibreuse tissée tridimensionnelle destinée à la réalisation d'une préforme fibreuse pour une aube telle que celle illustrée par la figure 1 ;
- les figures 3, 4 et 5 illustrent des étapes successives de réalisation d'une préforme fibreuse pour une aube telle qu'illustrée par la figure 1, à partir de l'ébauche fibreuse de la figure 2 ;
- les figures 6A et 6B montrent de façon très schématique un autre exemple de disposition de trois ensembles de couches de fils dans une ébauche fibreuse tissée tridimensionnelle destinée à la réalisation d'une préforme fibreuse pour une aube telle que celle illustrée par la figure 1 ;
- la figure 7 est une vue en coupe montrant le profil, mis à plat, d'une pale d'aube telle que celle de la figure 1 ;
- la figure 8 est une vue en coupe d'un ensemble de couches de fils de chaîne permettant d'obtenir un profil tel que celui de la figure 7 ;
- les figures 9A et 9B sont des vues en coupe chaîne montrant un mode de tissage de l'ébauche fibreuse de la figure 2 ;
- la figure 10 est une vue partielle en coupe selon un plan parallèle aux directions chaîne et trame dans une partie de l'ébauche fibreuse de la figure 2 correspondant à l'emplacement de jonction entre pale et plateforme d'aube ;
- la figure 11 est une vue partielle en coupe trame dans une partie de l'ébauche fibreuse de la figure 2 correspondant à l'emplacement de jonction entre pale et talon d'aube ;
- la figure 12A est une vue en coupe trame montrant un exemple de disposition de fils de trame dans une partie d'ébauche fibreuse correspondant à une partie de pied de pale ;
- les figures 12B à 12D sont des vues en coupe trame montrant des plans de chaîne pour un exemple de tissage tridimensionnel (multicouches) dans la partie d'ébauche fibreuse de la figure 12A ;
- la figure 13 est une vue schématique partielle en coupe montrant un autre mode de réalisation d'une partie d'ébauche correspondant à un pied de pale ;
- les figures 14 et 15 illustrent très schématiquement deux modes de réalisation d'une bande fibreuse tissée obtenue par tissage tridimensionnel comprenant une pluralité d'ébauches fibreuses telles que celle de la figure 2 ;
- la figure 16 indique des étapes successives d'un procédé de fabrication d'une aube de turbomachine conformément à l'invention ; et
- la figure 17 indique des étapes successives d'un procédé de fabrication d'une aube de turbomachine conformément à l'invention.

### Description détaillée de modes de réalisation

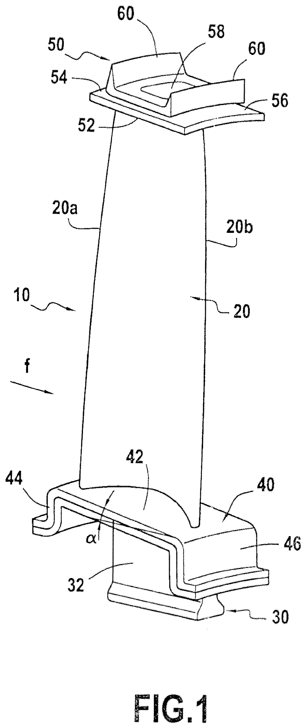

L'invention est applicable à différents types d'aubes de turbomachine à plateformes et/ou talon intégrés, notamment des aubes de compresseur et de turbine de différents corps de turbines à gaz, par exemple une aube de roue mobile de turbine basse pression (BP), telle que celle illustrée par la figure 1.

L'aube 10 de la figure 1 comprend de façon en soi bien connue, une pale 20, un pied 30 formé par une partie de plus forte épaisseur, par exemple à section en forme de bulbe, prolongé par une échasse 32, une plateforme intérieure 40 située entre l'échasse 32 et la pale 20 et une plateforme extérieure ou talon 50 au voisinage de l'extrémité libre de la pale.

La pale 20 s'étend en direction longitudinale entre la plateforme 40 et le talon 50 et présente en section transversale un profil incurvé d'épaisseur variable entre son bord d'attaque 20a et son bord de fuite 20b.

L'aube 10 est montée sur un rotor de turbine (non illustré) par engagement du pied 30 dans un logement de forme correspondante aménagé à la périphérie du rotor. Le pied 30 se prolonge par l'échasse 32 pour se raccorder à la face interne (ou inférieure) de la plateforme 40.

A son extrémité radiale interne, la pale 20 se raccorde à la plateforme 40 sur une face externe (ou supérieure) 42 de la plateforme qui délimite, à l'intérieur, la veine d'écoulement de flux gazeux dans la turbine. Dans ses parties d'extrémité amont et aval (dans le sens f d'écoulement du flux gazeux), la plateforme se termine par des becquets de recouvrement 44 et 46. Dans l'exemple illustré, la face 42 de la plateforme est inclinée en formant globalement un angle non nul α par rapport à la normale à la direction longitudinale de l'aube. Selon le profil souhaité de la surface intérieure de la veine d'écoulement de flux gazeux, l'angle α pourrait être nul, ou la face 42 pourrait avoir un profil globalement non rectiligne, par exemple incurvé.

A son extrémité radiale externe, la pale se raccorde au talon 50 sur une face interne (inférieure) 52 du talon qui délimite, à l'extérieur, la veine d'écoulement du flux gazeux. Dans ses parties d'extrémité amont et aval, le talon se termine par des becquets de recouvrement 54 et 56. Du côté externe (supérieur), le talon délimite une dépression ou baignoire 58. Le long des bords amont et aval de la baignoire 58, le talon porte des léchettes 60 à profil en forme de dents dont les extrémités peuvent pénétrer dans une couche de matériau abradable d'un anneau de turbine (non représenté) pour réduire le jeu entre le sommet d'aube et l'anneau de turbine. Dans l'exemple illustré, la face 52 du talon s'étend sensiblement perpendiculairement à la direction longitudinale de l'aube. En variante, selon le profil souhaité de la surface extérieure de la veine d'écoulement de flux gazeux, la face 52 pourrait être inclinée en formant globalement un angle non nul par rapport à la normale à la direction longitudinale de l'aube ou la face 52 pourrait avoir un profil globalement non rectiligne, par exemple incurvé.

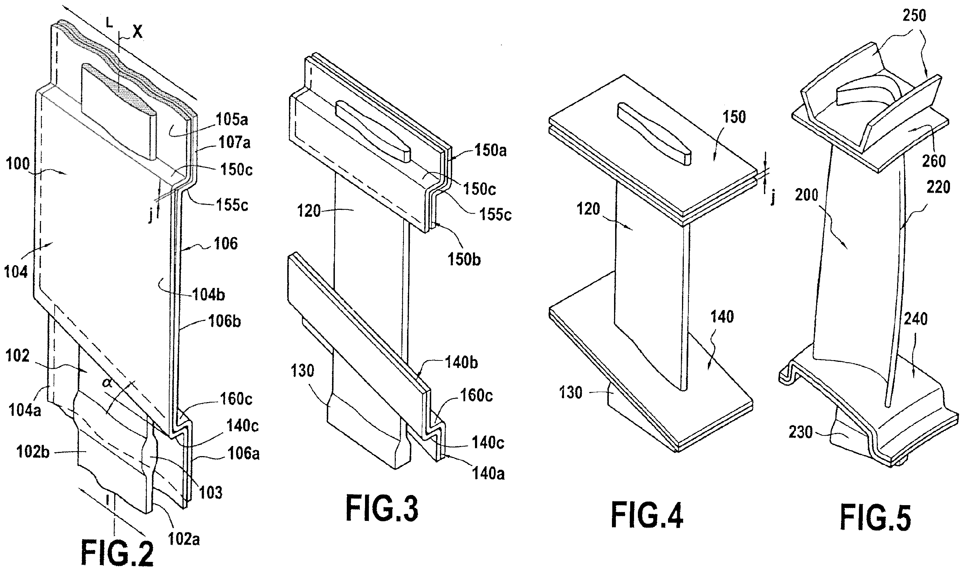

La figure 2 montre très schématiquement une ébauche fibreuse 100 à partir de laquelle une préforme fibreuse d'aube peut être mise en forme afin, après densification par une matrice et usinage éventuel, d'obtenir une aube en matériau composite à plateforme et talon intégrés telle que celle illustrée par la figure 1.

L'ébauche 100 comprend trois parties 102, 104 et 106 obtenues par tissage tridimensionnel ou tissage multicouches, seules les enveloppes de ces trois parties étant représentées sur la figure 2. La partie 102 est destinée, après mise en forme, à constituer une partie de préforme fibreuse d'aube correspondant à une préforme de pale et pied d'aube. La partie 104 est destinée, après mise en forme, à constituer les parties de préforme fibreuse d'aube correspondant à des préformes de plateforme d'aube et de léchettes de talon d'aube. Quant à la partie 106, elle est destinée, après mise en forme, à constituer les parties de préforme fibreuse d'aube correspondant à des préformes de renfort de plateforme d'aube et de becquets de recouvrement de talon d'aube.

Les trois parties 102, 104 et 106 sont sous forme de bandes s'étendant de façon générale dans une direction X correspondant à la direction longitudinale de l'aube à réaliser. La bande fibreuse 102 présente, dans sa partie destinée à former une préforme de pale, une épaisseur variable déterminée en fonction de l'épaisseur de profil de la pale de l'aube à réaliser. Dans sa partie destinée à former une préforme de pied, la bande fibreuse 102 présente une surépaisseur 103 déterminée en fonction de l'épaisseur du pied de l'aube à réaliser.

La bande fibreuse 102 a une largeur l choisie en fonction de la longueur du profil développé (à plat) de la pale et du pied de l'aube à réaliser tandis que les bandes fibreuses 104 et 106 ont chacune une largeur L supérieure à l choisie en fonction des longueurs développées de la plateforme et du talon de l'aube à réaliser.

Les bandes fibreuses 104 et 106 ont sensiblement la même largeur et sont chacune d'épaisseur sensiblement constante déterminée en fonction des épaisseurs de plateforme et de talon de l'aube à réaliser. Les bandes 104 et 106 comprennent chacune une première partie 104a, 106a qui s'étend le long et au voisinage d'une première face 102a de la bande 102, une deuxième partie 104b, 106b qui s'étend le long et au voisinage de la deuxième face 102b de la bande 102, et une troisième partie 105a, 107a qui s'étend le long et au voisinage de la première face 102a de la bande 102.

Les parties 104a et 104b de la bande 104 se raccordent par une partie de raccordement 140c qui s'étend transversalement par rapport à la bande 102 à un emplacement correspondant à celui de la plateforme de l'aube à réaliser. La partie de raccordement 140c traverse la bande en formant un angle α par rapport à la normale à la direction longitudinale de l'ébauche fibreuse. De même, les parties 106a et 106b de la bande 106 se raccordent par une partie de raccordement 160c qui s'étend transversalement par rapport à la bande 102 et qui est sensiblement parallèle à la bande de raccordement 140c (en pouvant éventuellement être espacée de celle-ci).

Les parties 104b et 105a de la bande 104 se raccordent par une partie de raccordement 150ç qui s'étend transversalement par rapport à la bande 102 à un emplacement correspondant à celui du talon de l'aube à réaliser. Dans l'exemple représenté, la partie de raccordement 150ç traverse la bande 102 sensiblement perpendiculairement à la direction longitudinale X de l'ébauche fibreuse. De même, les parties 106b et 107a de la bande 106 se raccordent par une partie de raccordement 155c qui s'étend transversalement par rapport à la bande 102 et qui est sensiblement parallèle et espacée de la bande de raccordement 150ç d'un jeu j.

Selon la géométrie souhaitée au niveau du talon de l'aube, les parties de raccordement 150c, 155c pourront traverser la bande 102 en formant un angle non nul par rapport à la normale à la direction longitudinale X de l'ébauche, comme pour la plateforme. En outre, le profil des parties de raccordement 140c, 160c et/ou celui des parties de raccordement 150c, 155c pourra être curviligne au lieu d'être rectiligne comme dans l'exemple illustré.

Par ailleurs, le jeu j prévu entre les parties de raccordement 150c, 155c pourra être nul. De même, il est possible de prévoir un jeu non nul entre les parties de raccordement 140c, 160c.

Comme décrit plus en détails plus loin, les bandes 102, 104 et 106 sont tissées simultanément par tissage tridimensionnel, sans liaison, d'une part entre la bande 102 et les parties 104a, 104b et 105a de la bande 104, et d'autre part entre la bande 102 et les parties 106a, 106b et 107a de la bande 106 et en tissant une pluralité d'ébauches 100 successives de façon continue dans la direction X. Aucune liaison n'est également réalisée entre les différentes parties des bandes 104 et 106.

Les figures 3 à 5 montrent très schématiquement comment une préforme fibreuse ayant une forme proche de celle de l'aube à fabriquer peut être obtenue à partir de l'ébauche fibreuse 100.

La bande fibreuse 102 est coupée à une extrémité dans la surépaisseur 103 et à une autre extrémité un peu au-delà des parties de raccordement 150c, 155c pour avoir une bande 120 de longueur correspondant à la dimension longitudinale de l'aube à fabriquer avec une partie renflée 130 formée par une partie de la surépaisseur 103 et située à un emplacement correspondant à la position du pied de l'aube à fabriquer.

En outre, des découpes sont pratiquées aux extrémités des parties 104a, 105a de la bande 104, aux extrémités 106a, 107a de la bande 106, et dans les parties 104b, 106b de celles-ci pour laisser subsister des tronçons 140a et 140b de part et d'autre des parties de raccordement 140c, 106c, ainsi que des tronçons 150a et 150b de part et d'autre des parties de raccordement 150c, 155c, comme le montre la figure 3. Les longueurs des tronçons 140a, 140b et 150a, 150b sont déterminées en fonction des longueurs de plateforme et de talon dans l'aube à fabriquer.

Du fait de la déliaison, d'une part entre la bande 102 et les parties 104a, 104b et 105a de la bande 104, et d'autre part entre la bande 102 et les parties 106a, 106b et 107a de la bande 106, les tronçons 140a, 140b, 150a et 150b peuvent être rabattus perpendiculairement à la bande 102 sans couper de fils pour former des plateaux 140, 150, comme montré par la figure 4.

Une préforme fibreuse 200 de l'aube à fabriquer est ensuite obtenue par moulage avec déformation de la bande 102 pour reproduire le profil incurvé de la pale de l'aube. Les deux couches du plateau inférieur 140 sont également déformées pour reproduire une forme semblable à celle de la plateforme de l'aube (avec notamment ses becquets de recouvrement). De même, la couche supérieure du plateau 150 est déformée pour reproduire une forme semblable à celle des léchettes du talon de l'aube, et la couche inférieure du plateau 150 est déformée pour reproduire une forme semblable à celle des becquets de recouvrement du talon d'aube (voir la figure 5). On obtient ainsi une préforme 200 avec une partie 220 de préforme de pale, une partie 230 de préforme de pied (avec préforme d'échasse), une partie 240 de préforme de plateforme (ayant une double épaisseur), une partie 250 de préforme de léchettes de talon, et une partie 260 de becquets de recouvrement de talon d'aube.

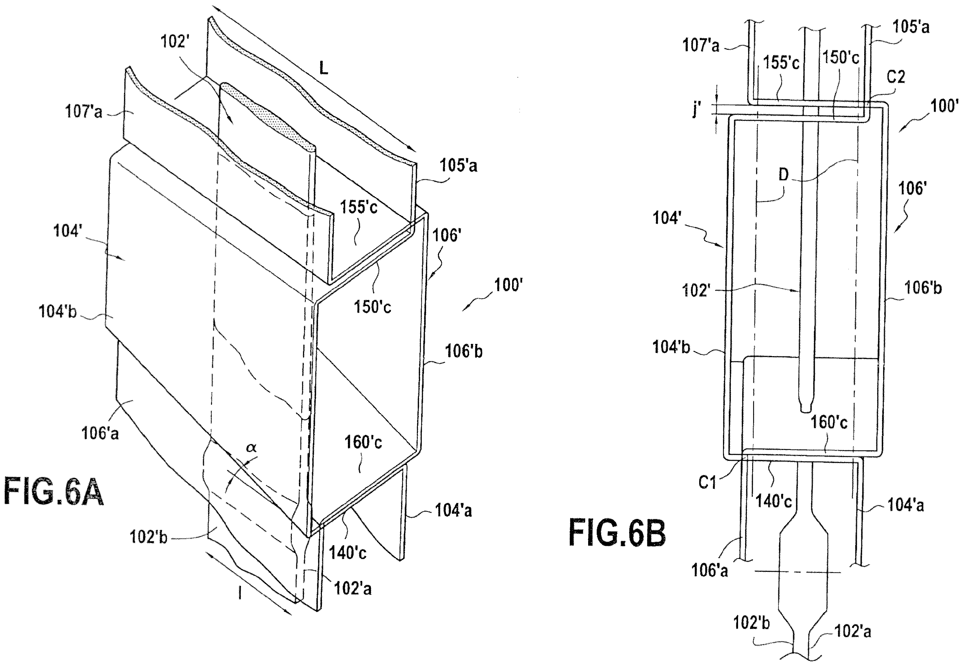

Les figures 6A et 6B illustrent un autre exemple d'ébauche fibreuse 100' à partir de laquelle une préforme fibreuse d'aube peut également être mise en forme.

Comme pour l'ébauche fibreuse décrite en liaison avec la figure 2, cette ébauche 100' comprend trois parties 102', 104' et 106' obtenues par tissage tridimensionnel ou tissage multicouches, seules les enveloppes de ces trois parties étant représentées sur les figures 6A et 6B.

Par rapport à l'ébauche de la figure 2, la première partie 104'a de bande 104' s'étend le long et au voisinage de la première face 102'a de la bande 102', tandis que la première partie 106'a de la bande 106' s'étend le long et au voisinage de la deuxième face 102'b de la bande 102', opposée à la première face. La deuxième partie 104'b de la bande 104' s'étend le long et au voisinage de la deuxième face 102'b de la bande 102', et la deuxième partie 106'b de la bande 106' s'étend le long et au voisinage de la première face 102'a de la bande 102'. Enfin, la troisième partie 105'a de la bande 104' s'étend le long et au voisinage de la première face 102'a de la bande 102', et la troisième partie 107'a de la bande 106' s'étend le long et au voisinage de la deuxième face 102'b de la bande 102'.

Les parties 104'a et 104'b de la bande 104' se raccordent par une partie de raccordement 140'c qui traverse transversalement la bande 102 dans un sens, tandis que les parties 106'a et 106'b de la bande 106' se raccordent par une partie de raccordement 160'c qui traverse transversalement la bande 102 dans le sens opposé. De même, les parties 104'b et 105'a de la bande 104' se raccordent par une partie de raccordement 150'c qui traverse transversalement la bande 102 dans un sens, tandis que les parties 106'b et 107'a de la bande 106' se raccordent par une partie de raccordement 155'c qui traverse transversalement la bande 102 dans le sens opposé et qui est espacée de la bande de raccordement 150'c d'un jeu j' non nul (aucun jeu n'est prévu ici entre les parties de raccordement 140'c et 160'c).

La manière dont une préforme fibreuse ayant une forme proche de celle de l'aube à fabriquer peut être obtenue à partir de cette ébauche fibreuse 100' est identique à celle décrite en liaison avec les figures 3 à 5 et ne sera donc pas reprise ici en détails.

En particulier, des découpes sont pratiquées aux extrémités des parties de raccordement 140'c, 160'c de sorte à ne pas garder les premières parties 104'a et 106'a des bandes 104' et 106'. De même, au niveau du talon de l'aube à fabriquer, les découpes sont réalisées aux extrémités des parties de raccordement 150'c, 155'c de sorte à éliminer les troisièmes parties 105'a et 107'a des bandes 104' et 106' (les lignes de découpe sont schématisées par les lignes D sur la figure 6B). En d'autres termes, les plateaux qui seront ultérieurement déformés pour reproduire des formes semblables à celles de la plateforme et du talon de l'aube sont constitués uniquement par les parties de raccordement 140'c, 160'c, et 105'a et 107'a. Ainsi, le croisement C1 de couches de fils entre la première partie 106'a de la bande 106' et la partie de raccordement 140'c est éliminé, de même que le croisement C2 de couches de fils entre la troisième partie 105'a de la bande 104' et la partie de raccordement 155'c.

Seules les différences avec l'ébauche fibreuse de la figure 2 ont été détaillées ici. Bien entendu, les autres caractéristiques de l'ébauche décrite en liaison avec la figure 2 sont applicables à cet exemple de réalisation.

Par ailleurs, à partir de ces deux exemples d'ébauche fibreuse 100 et 100', il est possible d'imaginer des variantes de réalisation dans lesquelles seule la préforme de la plateforme ou seule la préforme du talon de l'aube à fabriquer n'est formée qu'à partir d'une seule bande fibreuse.

Comme décrit plus loin, les étapes de réalisation d'une préforme d'aube à partir d'une ébauche fibreuse sont avantageusement réalisées après traitement des fibres de l'ébauche et imprégnation de celle-ci par une composition de consolidation.

Un mode de tissage tridimensionnel de l'ébauche fibreuse 100 sera maintenant décrit plus en détail.

Il est supposé que le tissage est réalisé avec des fils de chaîne s'étendant dans la direction longitudinale X de l'ébauche, étant noté qu'un tissage avec des fils de trame dans cette direction est également possible.

La variation d'épaisseur de la bande 102 sur sa largeur est obtenue en utilisant des fils de chaîne de titre variable. On peut en variante ou en complément faire varier la contexture des fils de chaîne (nombre de fils par unité de longueur en sens trame), une contexture plus faible autorisant un amincissement plus important lors de la mise en forme de la préforme par moulage.

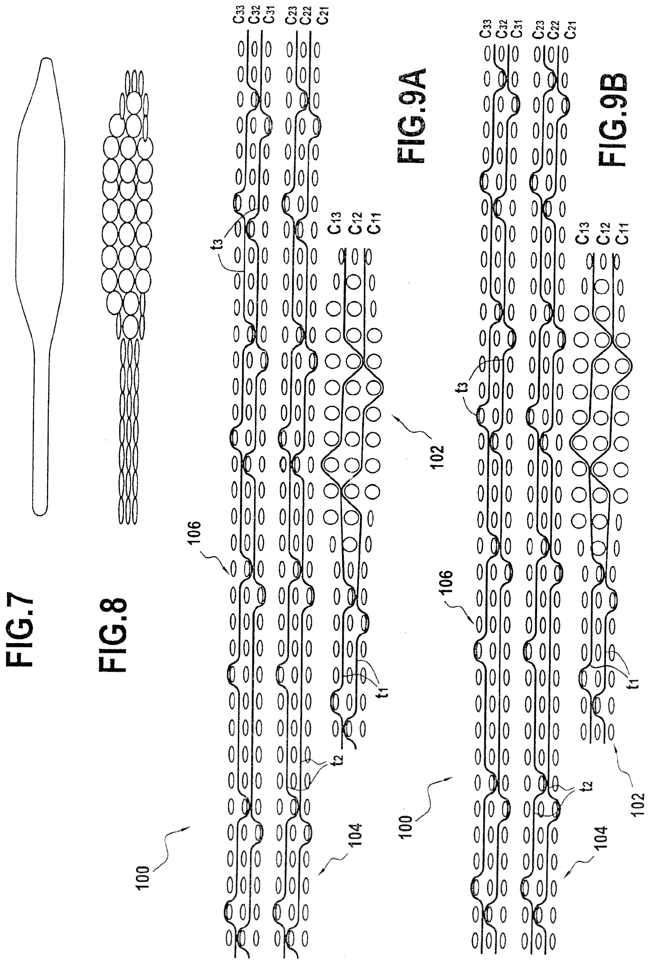

Ainsi, pour obtenir un profil de pale d'aube tel que représenté en projection à plat sur la figure 7, on peut utiliser 3 couches de fils de chaîne de titre et de contexture variables comme illustré par la figure 8.

Dans un exemple de réalisation, les fils utilisés peuvent être des fils de carbure de silicium (SiC) fournis sous la dénomination "Nicalon" par la société japonaise Nippon Carbon et ayant un titre (nombre de filaments) de 0,5K (500 filaments).

On forme la chaîne avec des fils SiC de 0,5K et des fils SiC de 1K obtenus par la réunion de deux fils de 0,5K, les deux fils étant réunis par guipage. Le guipage est réalisé avantageusement avec un fil à caractère fugace susceptible d'être éliminé après tissage, par exemple un fil en alcool polyvinylique (PVA) éliminable par dissolution dans l'eau.

Le tableau I ci-dessous donne, pour chaque colonne de fils de chaîne, la contexture (nombre de fils/cm dans la longueur du profil), le nombre de fils 0,5K, le nombre de fils 1K et l'épaisseur de profil en mm, celle-ci variant ici entre 1 mm et 2,5 mm environ :

**Tableau I**

| Colonne | 1 | 2 | 3 | 4 | 5 | 6 | 7 | 8 | 9 | 10 | 11 | 12 | 13 | 14 | 15 | 16 17 | | 18 | 19 |
|---|---|---|---|---|---|---|---|---|---|---|---|---|---|---|---|---|---|---|---|
| Contexture | 6 | 6 | 6 | 6 | 6 | 6 | 6 | 8 | 8 | 8 | 8 | 8 | 8 | 8 | 8 | 8 | 8 | 8 | 6 |
| Nb fils 0,5K | 3 | 3 | 3 | 3 | 3 | 3 | 3 | 2 | 1 | 0 | 0 | 0 | 0 | 0 | 0 | 0 | 2 | 1 | 3 |
| Nb fils 2x0,5K | 0 | 0 | 0 | 0 | 0 | 0 | 0 | 1 | 2 | 3 | 3 | 3 | 3 | 3 | 3 | 3 | 1 | 2 | 0 |
| Epaisseur | 1 | 1 | 1 | 1 | 1 | 1 | 1,2 | 1,5 | 2 | 2,2 | 2,4 | 2,5 | 2,4 | 2,4 | 2,2 | 2,1 | 1,8 | 1,5 | 1,2 |

Bien entendu, selon les titres de fils disponibles, différentes combinaisons de nombres de couches de fils et de variations de contexture et de titre pourront être adoptées pour le profil à obtenir.

Les figures 9A, 9B montrent, en coupe chaîne, deux plans successifs d'une armure pouvant être utilisée pour le tissage de l'ébauche fibreuse 100 de la figure 2 hors de la surépaisseur 103.

La bande 102 de l'ébauche fibreuse 100 comprend un ensemble de couches de fils de chaîne, le nombre de couches étant ici par exemple égal à 3 (couches C₁₁, C₁₂, C₁₃). Les fils de chaîne sont liés par des fils de trame t₁ par tissage tridimensionnel.

La bande 104 comprend aussi un ensemble de couches de fils de chaîne par exemple également égal à 3 (couches C₂₁, C₂₂, C₂₃) liés par des fils de trame t₂ par tissage tridimensionnel, comme la bande 102. Il en est de même de la bande 106 qui comprend un ensemble de couches de fils de chaîne par exemple également égal à 3 (couches C₃₁, C₃₂, C₃₃) liés par des fils de trame t₃ par tissage tridimensionnel, comme les bandes 102 et 104.

On note que les fils de trame t₁ ne s'étendent pas dans les couches de fils de chaîne des bandes 104 et 106, que les fils de trame t₂ ne s'étendent pas dans les couches de fils de chaîne des bandes 102 et 106, et que les fils de trame t₃ ne s'étendent pas dans les couches de fils de chaîne des bandes 102 et 104 afin d'assurer une déliaison.

Dans l'exemple illustré, le tissage est un tissage multicouches réalisé avec une armure de type satin, ou multi-satin. D'autres types de tissage tridimensionnel pourront être utilisés, par exemple un tissage multicouches à armure multi-toile ou un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

Différents modes de tissage tridimensionnel sont notamment décrits dans le document WO 2006/136755 dont le contenu est incorporé ici par voie de référence. Par ailleurs, on notera que l'exemple décrit ici s'applique de la même façon à l'exemple d'ébauche fibreuse 100' décrit en liaison avec les figures 6A et 6B.

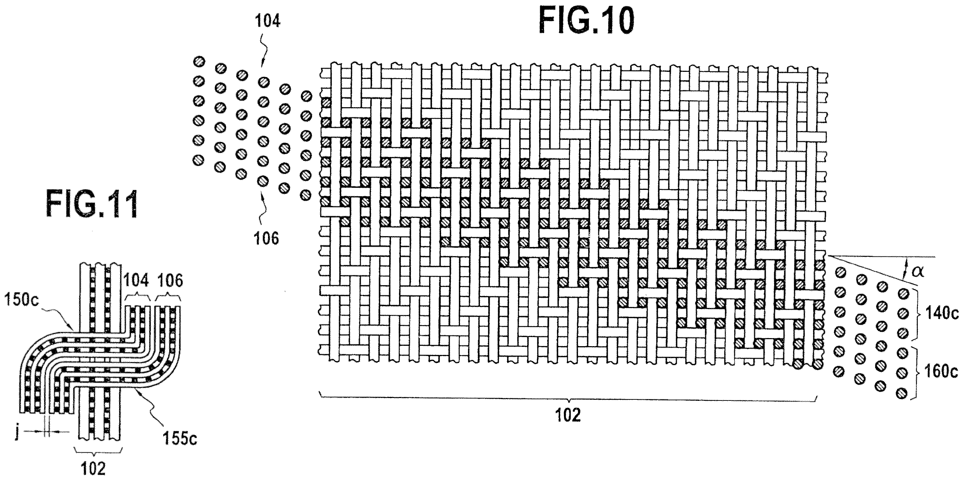

La figure 10 est une vue en coupe parallèlement aux sens chaîne et trame au niveau de la traversée de la bande 102 par les parties de raccordement 140c, 160c des bandes 104 et 106 de l'ébauche fibreuse de la figure 2, ces parties de raccordement s'étendant parallèlement l'une à l'autre sans pour autant être espacées (le jeu j1 est nul). Sur la figure 10, les fils de chaîne de ces parties de raccordement sont vus en coupe. Chaque couche de fils de chaîne s'étend, dans ces parties de raccordement 140c, 160c, dans une direction faisant un angle α par rapport à la direction trame de la bande 102. Le passage des bandes 104 et 106 d'un côté à l'autre de la bande 102 est réalisé, lors du tissage, en faisant traverser l'ensemble des fils de chaîne et de trame de la bande 102 par chaque fil de chaîne des bandes 104 et 106, individuellement. Bien entendu, comme indiqué précédemment, ces parties de raccordement 140c, 160c pourraient être espacées l'une de l'autre et/ou s'étendre perpendiculairement à la direction chaîne de la bande 102.

La figure 11 est une vue en coupe trame au niveau de la traversée de la bande 102 par les parties de raccordement 150c, 155c des bande 104 et 106. Dans l'exemple illustré, comme déjà indiqué, les parties de raccordement 150c, 155c s'étendent perpendiculairement à la direction chaîne de la bande 102, sont sensiblement parallèles l'une à l'autre en étant espacées d'un jeu j2. Toutefois, comme pour les parties de raccordement 140c, 160c, on pourra avoir des parties de raccordement 150c, 155c qui s'étendent en faisant un angle non nul par rapport à la normale à la direction chaîne, selon l'orientation désirée du talon, et/ou qui ne sont pas espacées l'une de l'autre (j2 est nul).

Pour l'ébauche fibreuse des figures 6A et 6B, le passage des bandes 104' et 106' d'un côté à l'autre de la bande 102' est réalisé en faisant passer chaque fil de chaîne de la bande 104' individuellement dans un sens au travers de la bande 102', et en faisant passer chaque fil de chaîne de la bande 106' individuellement dans le sens opposé au travers de la bande 102'.

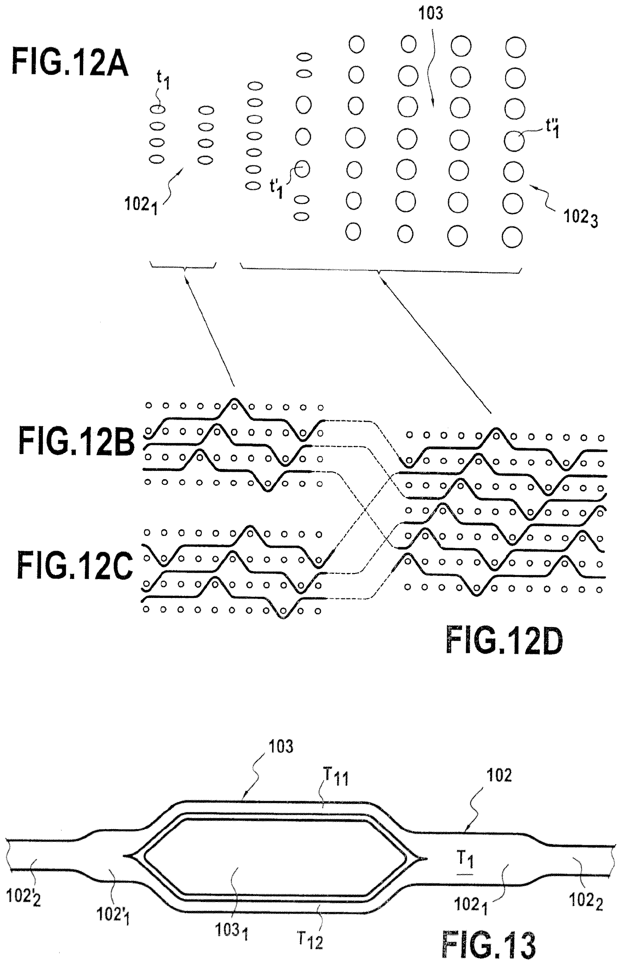

La surépaisseur 103 peut être obtenue en utilisant des fils de trame de plus gros titre et des couches supplémentaires de fils de trame, comme le montre par exemple la figure 12A.

Sur la figure 12A, le nombre de couches de fils de trame passe dans cet exemple de 4 à 7 entre une partie 102₁ de la bande 102, correspondant à l'échasse de l'aube et la partie 102₃ de la bande 102 présentant la surépaisseur 103.

En outre, des fils de trame t₁, t'₁, t"₁ de titres différents sont utilisés, les fils t₁ étant par exemple des fils de SiC "Nicalon" de titre 0,5K (500 filaments), les fils t'₁ étant obtenus par la réunion de 2 fils de 0,5K et les fils t"₁ par la réunion de 3 fils de 0,5K.

Le tissage dans la partie d'ébauche 102₃ nécessite des couches de fils de chaîne en plus grand nombre que dans la partie 102₁. Cela est avantageusement réalisé lors de la transition entre la partie 102₁ et la partie 102₃ en diminuant le nombre de plans de chaîne en constituant chaque plan de chaîne dans la partie 102₃ par la réunion des fils de chaîne de deux plans de chaîne de la partie 102₁. Les figures 12B et 12C montrent deux plans de chaîne voisins dans la partie 102₁ et la figure 12D montre un plan de chaîne obtenu dans la partie 102₃ par la réunion des plans de chaîne des figures 12B et 12C. Sur les figures 12B, 12C et 12D, on n'a pas montré les titres différents des fils de chaîne (comme montré sur la figure 8) ou des fils de trame (comme montré sur la figure 12A) par souci de simplicité. Entre les figures 12B, 12C, d'une part, et la figure 12D, d'autre part, les tirets montrent comment les fils de chaîne des différentes couches dans les figures 12B, 12C forment les couches de fils de chaîne de la figure 12D.

Bien entendu, différentes combinaisons de nombres de couches de trame et de titres de fils de trame pourront être adoptées pour former la surépaisseur 103.

Selon un autre mode de réalisation montré schématiquement sur la figure 13, la surépaisseur 103 peut être obtenue en introduisant un insert lors du tissage de la bande 102.

Sur la figure 13, l'ensemble T₁ de couches de fils de trame de la partie 102₁ de la bande 102 correspondant à l'échasse de l'aube est divisé par déliaison lors du tissage en deux sous-ensembles T₁₁, T₁₂ entre lesquels un insert 103₁ est introduit. Dans l'exemple illustré, la partie 102₁ a une épaisseur plus importante que celle de la partie 102₂ de la bande 102 correspondant à la pale de l'aube. La transition entre la partie 102₂ et la partie 102₁ pourra être réalisée de la même manière que décrit plus haut pour la transition entre les parties 102₁ et 102₃ de la figure 12A. La traversée de la nappe 102 par les nappes 104 et 106 au niveau des parties de raccordement 140ç, 160ç de la figure 2 pourra éventuellement être réalisée à travers la partie 102₁ de plus forte épaisseur (il en est de même pour l'ébauche fibreuse des figures 6A et 6B).

A l'extrémité de l'insert 103, opposée à la partie 102₁, les sous-ensembles T₁₁, T₁₂ de couches de fils de trame sont à nouveau réunis par tissage pour former une partie 102'₁ de même épaisseur que la partie 102₁, puis, par réduction d'épaisseur, une partie 102'₂ de même épaisseur que la partie 102₂, la partie 102'₂ formant la partie correspondant à une pale d'aube pour l'ébauche suivante tissée.

L'insert 103₁ est de préférence en céramique monolithique, de préférence le même matériau céramique que celui de la matrice du matériau composite de l'aube à fabriquer. Ainsi, l'insert 103₁ peut être un bloc de SiC obtenu par frittage de poudre SiC.

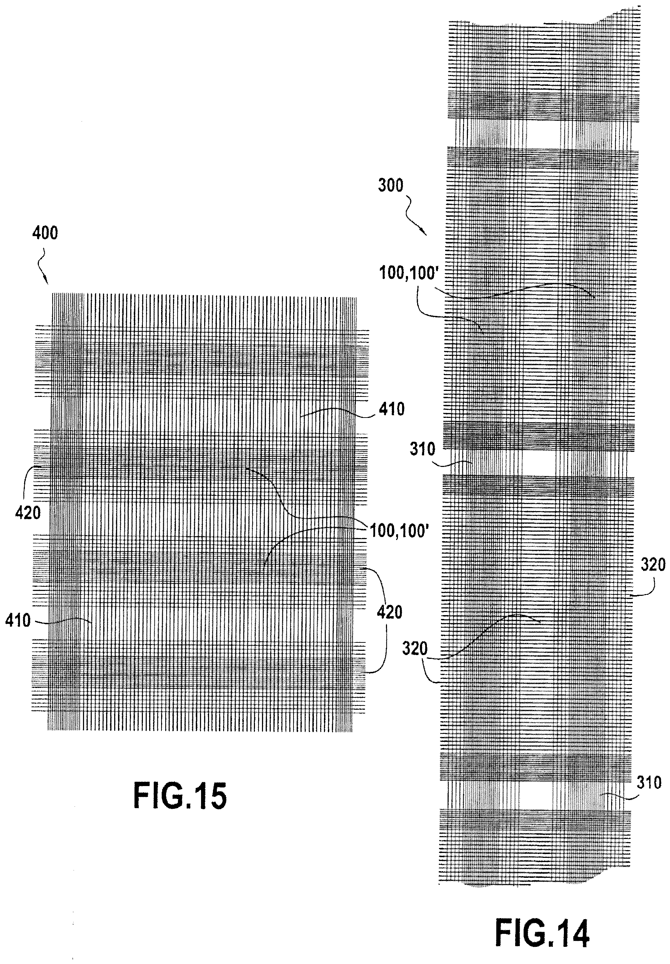

Comme le montre très schématiquement la figure 14, une pluralité d'ébauches fibreuses 100, 100' peut être obtenue par tissage d'une bande 300 dans laquelle sont formées une ou plusieurs rangées d'ébauches fibreuses successives. Des zones de sur-longueurs 310, 320 sont ménagées en sens chaîne (uniquement fils de chaîne) et en sens trame (uniquement fils de trame) pour éviter des phénomènes de bord liés au tissage, laisser une plus grande liberté de déformation lors de la mise en forme de la préforme et aménager des zones de transition entre ébauches 100, 100'.

La figure 15 montre une variante de réalisation selon laquelle une bande 400 est réalisée avec une rangée d'ébauches 100, 100' tissées en sens trame perpendiculairement à la direction longitudinale de la bande. Des zones de sur-longueurs 410, 420 sont également ménagées en sens chaîne et en sens trame. Plusieurs rangées d'ébauches 100, 100' peuvent être tissées, la largeur de la bande 400 étant adaptée à cet effet.

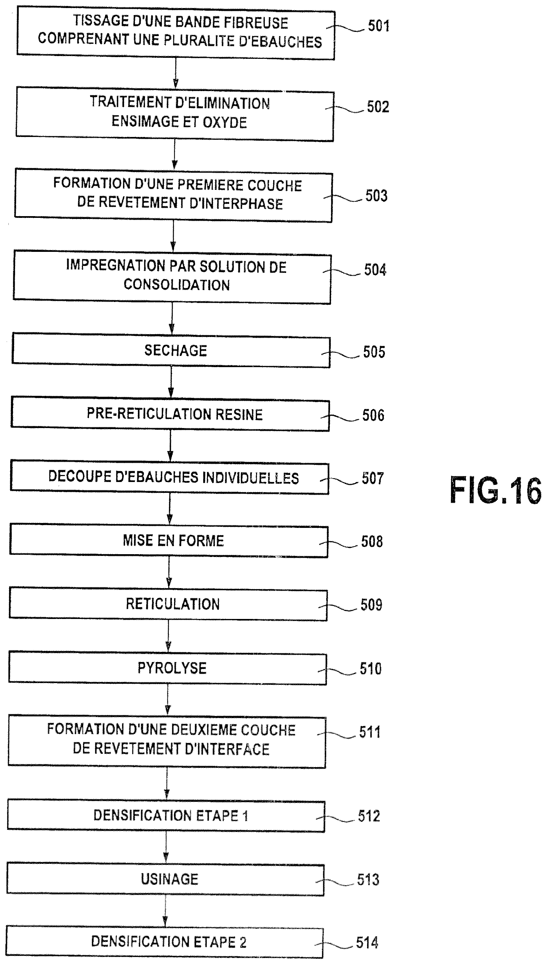

Des étapes successives d'un procédé de fabrication d'une aube en matériau composite selon un mode de mise en oeuvre de l'invention sont indiquées sur la figure 16.

A l'étape 501, une bande fibreuse est tissée par tissage tridimensionnel comprenant une pluralité d'ébauches fibreuses, par exemple plusieurs rangées d'ébauches fibreuses orientées en sens chaîne, comme montré sur la figure 14. Pour des aubes de turbomachine destinées à une utilisation à température élevée et notamment en environnement corrosif (notamment humidité), on utilise pour le tissage des fils formés de fibres en céramique, notamment des fibres de carbure de silicium (SiC).

A l'étape 502, la bande fibreuse est traitée pour éliminer l'ensimage présent sur les fibres et la présence d'oxyde à la surface des fibres. L'élimination de l'oxyde est obtenue par traitement acide, notamment par immersion dans un bain d'acide fluorhydrique. Si l'ensimage n'est pas éliminable par le traitement acide, un traitement préalable d'élimination de l'ensimage est réalisé, par exemple par décomposition de l'ensimage par bref traitement thermique.

A l'étape 503, une couche mince de revêtement d'interphase est formé sur les fibres de la bande fibreuse par infiltration chimique en phase gazeuse ou CVI ("Chemical Vapor Infiltration"). Le matériau du revêtement d'interphase est par exemple du carbone pyrolytique ou pyrocarbone (PyC), du nitrure de bore (BN) ou du carbone dopé au bore (BC, avec par exemple 5%at à 20%at de B, le complément étant C). La mince couche de revêtement d'interphase est de préférence de faible épaisseur, par exemple au plus égale à 100 nanomètres, voire au plus égale à 50 nanomètres, de manière à conserver une bonne capacité de déformation des ébauches fibreuses. De préférence, l'épaisseur est au moins égale à 10 nanomètres.

A l'étape 504, la bande fibreuse avec les fibres revêtues d'une mince couche de revêtement d'interphase est imprégnée par une composition de consolidation, typiquement une résine éventuellement diluée dans un solvant. On peut utiliser une résine précurseur de carbone, par exemple une résine phénolique ou furanique, ou une résine précurseur de céramique, par exemple une résine polysilazane ou polysiloxane précurseur de SiC.

Après séchage par élimination du solvant éventuel de la résine (étape 505), une pré-réticulation de la résine peut être effectuée (étape 506). La pré-réticulation, ou réticulation incomplète permet d'accroître la raideur, donc la tenue, tout en préservant la capacité de déformation nécessaire pour la réalisation de préformes d'aubes.

A l'étape 507, les ébauches fibreuses individuelles sont découpées, comme illustré par la figure 3.

A l'étape 508, une ébauche fibreuse ainsi découpée est mise en forme (comme illustré par les figures 4 et 5) et placée dans un moule par exemple en graphite pour conformation de la partie de préforme de pale et pied et des parties de préforme de plateforme et de talon.

Ensuite, la réticulation de la résine est achevée (étape 509) et la résine réticulée est pyrolysée (étape 510). La réticulation et la pyrolyse peuvent être enchaînées par élévation progressive de la température dans le moule.

Après pyrolyse, on obtient une préforme fibreuse consolidée par le résidu de pyrolyse. La quantité de résine de consolidation est choisie pour que le résidu de pyrolyse lie les fibres de la préforme de façon suffisante pour que celle-ci soit manipulable en conservant sa forme sans l'assistance d'un outillage, étant noté que la quantité de résine de consolidation est de préférence choisie aussi faible que possible.

Des étapes d'élimination d'ensimage, de traitement acide et de formation de revêtement d'interphase pour un substrat en fibres SiC sont connues. On pourra se référer au document US 5,071,679.

Une deuxième couche d'interphase est formée par CVI (étape 511) afin d'obtenir globalement une interphase fibres-matrice ayant une épaisseur suffisante pour assurer sa fonction de défragilisation du matériau composite. La deuxième couche d'interphase peut être en matériau choisi parmi PyC, BN, BC, pas nécessairement le même que celui de la première couche d'interphase. L'épaisseur de la deuxième couche d'interphase est de préférence au moins égale à 100 nanomètres.

La réalisation d'une interphase en deux couches, comme indiquée ci-avant est préférée. Elle est décrite dans la demande de brevet français déposée sous le N° 08 54937 par Snecma Propulsion Solide.

Une densification par une matrice de la préforme consolidée est ensuite réalisée. Pour une aube de turbomachine destinée à une utilisation à température élevée, et notamment en milieu corrosif, la matrice est en céramique, par exemple en SiC. On peut réaliser la densification par CVI, auquel cas la formation de la deuxième couche d'interphase et la densification par la matrice peuvent être enchaînées dans un même four.

La densification peut être réalisée en deux étapes successives (étapes 512 et 514) séparées par une étape 513 d'usinage de l'aube aux dimensions désirées.

On notera qu'un pré-usinage peut être réalisé entre les étapes 509 et 510, c'est-à-dire après réticulation et avant pyrolyse de la résine.

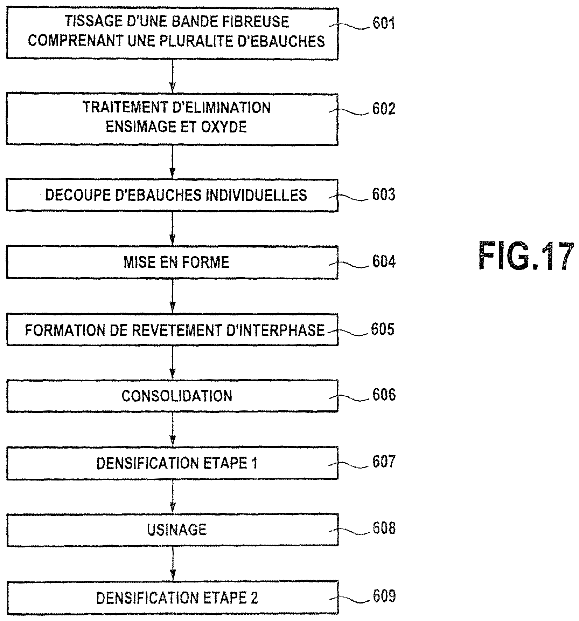

Des étapes successives d'un procédé de fabrication d'une aube en matériau composite selon un autre mode de mise en oeuvre de l'invention sont indiquées sur la figure 17.

L'étape 601 de tissage tridimensionnel d'une bande fibreuse comprenant une pluralité d'ébauches fibreuses et l'étape 602 de traitement d'élimination d'ensimage et d'oxyde sont semblables aux étapes 501 et 502 du mode de réalisation de la figure 16.

A l'étape 603, des ébauches fibreuses individuelles sont découpées dans la bande fibreuse, puis chaque ébauche fibreuse individuelle est mise en forme dans un moule ou conformateur (étape 604) pour obtenir une préforme fibreuse d'aube par conformation de la partie de préforme de pale et pied et des parties de préforme de plateforme et de talon.

A l'étape 605, un revêtement d'interphase de défragilisation est formé par CVI sur les fibres de la préforme maintenue dans le conformateur. Le matériau du revêtement d'interphase est par exemple PyC, BN ou BC, comme précédemment mentionné. L'épaisseur du revêtement d'interphase est d'environ une à quelques centaines de nanomètres.

La préforme étant toujours maintenue dans le conformateur, une consolidation de la préforme par densification partielle est réalisée (étape 606), la consolidation étant réalisée par formation de dépôt céramique sur les fibres par CVI.

La formation du revêtement d'interphase par CVI et la consolidation par dépôt céramique par CVI peuvent être enchaînées dans un même four CVI.

Le conformateur est de préférence en graphite et présente des trous facilitant le passage des phases gazeuses réactionnelles donnant le dépôt d'interphase et le dépôt céramique par CVI.

Lorsque la consolidation est suffisante pour que la préforme puisse être manipulée tout en conservant sa forme sans assistance d'outillage de maintien, la préforme consolidée est extraite du conformateur et la densification par une matrice céramique par CVI est réalisée. La densification peut être réalisée en deux étapes successives (étapes 607 et 609) séparées par une étape 608 d'usinage de l'aube aux dimensions désirées.

Dans ce qui précède, on a envisagé la réalisation d'un profil de pale à épaisseur variable par l'utilisation de fils de titre et/ou contexture variables. Il est possible, en variante, de réaliser la partie d'ébauche fibreuse correspondant à la partie de préforme de pale avec un certain nombre de couches de fils de même titre et avec contexture fixe, la variation d'épaisseur du profil étant réalisée lors de l'usinage après première étape de densification ou lors d'un pré-usinage de la préforme d'aube consolidée.

Par ailleurs, selon les conditions d'utilisation envisagées pour l'aube, les fibres du renfort fibreux de l'aube peuvent être en un matériau autre qu'une céramique, par exemple en carbone, et la matrice peut être en un matériau autre qu'une céramique, par exemple en carbone ou en une résine, l'invention étant bien entendu applicable aussi à la fabrication d'aubes en matériau composite à matrice organique.

## Revendications

1. Procédé de fabrication d'une aube (10) de turbomachine en matériau composite comprenant un renfort fibreux densifié par une matrice, le procédé comprenant :
- la réalisation par tissage tridimensionnel d'une ébauche fibreuse (100) en une seule pièce,
- la mise en forme de l'ébauche fibreuse pour obtenir une préforme fibreuse (200) en une seule pièce ayant une première partie (102) formant préforme de pale et pied d'aube, au moins une deuxième partie (104) formant préforme de plateforme d'aube ou préforme de léchettes de talon d'aube, et au moins une troisième partie (106) formant préforme de renfort de plateforme d'aube ou préforme de becquets de recouvrement de talon d'aube, et
- la densification de la préforme fibreuse par une matrice pour obtenir une aube en matériau composite ayant un renfort fibreux constitué par la préforme et densifié par la matrice, et formant une seule pièce avec plateforme et/ou talon intégrés.

2. Procédé selon la revendication 1, **caractérisé en ce que**, dans la direction longitudinale correspondant à la direction longitudinale de l'ébauche fibreuse à fabriquer, l'ébauche fibreuse comprend :
- un premier ensemble de plusieurs couches de fils qui sont liées entre elles pour former une première partie de l'ébauche correspondant à la préforme de pale et pied d'aube ;
- un deuxième ensemble de plusieurs couches de fils qui sont liées entre elles au moins localement pour former au moins une deuxième partie de l'ébauche correspondant à la préforme de plateforme d'aube ou à la préforme de léchettes de talon d'aube ; et
- un troisième ensemble de plusieurs couches de fils qui sont liées entre elles au moins localement pour former au moins une troisième partie de l'ébauche correspondant à la préforme de renfort de plateforme d'aube ou à la préforme de becquets de recouvrement de talon d'aube ;
**en ce que** les fils du premier ensemble de couches de fils ne sont pas liés aux fils du deuxième et du troisième ensembles de couches de fils, et
**en ce que** le premier ensemble de couches de fils est traversé par des fils du deuxième et du troisième ensembles de couches de fils au niveau de la ou de chaque deuxième partie de l'ébauche fibreuse et au niveau de la ou de chaque troisième partie de l'ébauche fibreuse.

3. Procédé selon la revendication 2, **caractérisé en ce que** l'ébauche fibreuse est tissée avec un deuxième ensemble et un troisième ensembles continus de couches de fils et la mise en forme de l'ébauche fibreuse comprend l'élimination par découpe de parties du deuxième et du troisième ensembles de couches de fils extérieures à la ou à chaque deuxième partie de l'ébauche fibreuse et à la ou à chaque troisième partie de l'ébauche fibreuse.

4. Procédé selon l'une des revendications 2 et 3, **caractérisé en ce que** les deuxième et le troisième ensembles de couches de fils traversent le premier ensemble de couches de fils dans le même sens.

5. Procédé selon l'une des revendications 2 et 3, **caractérisé en ce que** les deuxième et le troisième ensembles de couches de fils traversent le premier ensemble de couches de fils en sens opposés.

6. Procédé selon l'une quelconque des revendications 1 à 5, **caractérisé en ce que**, dans la première partie de l'ébauche fibreuse et dans une direction correspondant à celle s'étendant le long du profil d'une pale d'épaisseur variable dans l'aube à fabriquer, le nombre de couches de fils dans le premier ensemble de couches de fils est constant.

7. Procédé selon la revendication 6, **caractérisé en ce que** les fils du premier ensemble de couches de fils sont de titre variable.

8. Procédé selon l'une quelconque des revendications 6 et 7, **caractérisé en ce que** la contexture des fils du premier ensemble de couches de fils est variable.

9. Procédé selon l'une quelconque des revendications 1 à 8, **caractérisé en ce que** l'on réalise par tissage tridimensionnel une bande comprenant une succession d'ébauches fibreuses.

10. Procédé selon l'une quelconque des revendications 1 à 9, **caractérisé en ce que** les ébauches sont tissées avec leur direction longitudinale correspondant à celle des aubes à fabriquer s'étendant en sens trame.

11. Procédé selon l'une quelconque des revendications 1 à 9, **caractérisé en ce que** les ébauches sont tissées avec leur direction longitudinale correspondant à celle des aubes à fabriquer s'étendant en sens chaîne.

12. Aube (10) de turbomachine en matériau composite comprenant un renfort fibreux obtenu par tissage tridimensionnel de fils et densifié par une matrice, l'aube comprenant une première partie (102) constitutive de pale et pied d'aube formant une seule pièce avec
au moins une deuxième partie (104) constitutive d'une plateforme ou de léchettes de talon d'aube,
et avec au moins une troisième partie (106) constitutive de renfort de plateforme ou de préforme de becquets de recouvrement de talon d'aube,
les parties de renfort fibreux correspondant à la première, la deuxième et la troisième parties de l'aube étant au moins en partie mutuellement imbriquées, avec des fils de la première partie de renfort fibreux pénétrant dans la deuxième partie de renfort fibreux.

13. Aube selon la revendication 12, **caractérisé en ce qu'**elle est en matériau composite à matrice céramique.

14. Aube selon l'une des revendications 12 et 13, **caractérisée en ce que** des fils constitutifs de la partie du renfort fibreux correspondant aux deuxième et troisième parties de l'aube traversent la partie du renfort fibreux correspondant à la première partie de l'aube.

15. Aube selon l'une quelconque des revendications 12 à 14, **caractérisée en ce que** la pale de l'aube a un profil d'épaisseur variable le long duquel la partie de renfort fibreux correspondant à la première partie de l'aube a un nombre constant de couches de fils s'étendant dans la direction longitudinale de l'aube et ayant un titre et/ou une contexture variables.

16. Aube selon l'une quelconque des revendications 12 à 14, **caractérisée en ce que** la pale de l'aube a un profil d'épaisseur variable le long duquel la partie de renfort fibreux correspondant à la première partie de l'aube a un nombre variable de couches de fils s'étendant dans la direction longitudinale de l'aube.

17. Turbomachine équipée d'au moins une aube (10) selon l'une quelconque des revendications 12 à 16 ou fabriquée selon le procédé de l'une quelconque des revendications 1 à 11.

## Patentansprüche

1. Verfahren zur Herstellung einer Turbomaschinenschaufel (10) aus Verbundwerkstoff mit einer durch eine Matrix verdichteten Faserverstärkung, wobei das Verfahren umfasst:
- die Herstellung eines einstückigen Faserrohlings (100) durch dreidimensionales Weben,
- das Informbringen des Faserrohlings, um einen einstückigen Faservorformling (200) zu erhalten, der einen ersten Teil (102), welcher einen Blatt- und Schaufelfuß-Vorformling bildet, wenigstens einen zweiten Teil (104), welcher einen Schaufelplattform-Vorformling oder einen Vorformling von Schaufeldeckbandzungen bildet, sowie wenigstens einen dritten Teil (106), welcher einen Vorformling einer Schaufelplattformverstärkung oder einen Vorformling von Abdeckspoilern des Schaufeldeckbands bildet, aufweist, und
- das Verdichten des Faservorformlings durch eine Matrix, um eine Schaufel aus Verbundwerkstoff zu erhalten, die eine durch den Vorformling gebildete und durch die Matrix verdichtete Faserverstärkung aufweist und die mit der/dem integrierten Plattform und/oder Deckband ein einziges Stück bildet.

2. Verfahren nach Anspruch 1, **dadurch gekennzeichnet, dass** in der Längsrichtung, welche der Längsrichtung des herzustellenden Faserrohlings entspricht, der Faserrohling umfasst:
- einer erste Anordnung von mehreren Fadenlagen, die untereinander verbunden sind, um einen ersten Teil des Rohlings zu bilden, welcher dem Blatt- und Schaufelfuß-Vorformling entspricht,
- eine zweite Anordnung von mehreren Fadenlagen, die wenigstens lokal untereinander verbunden sind, um wenigstens einen zweiten Teil des Rohlings zu bilden, welcher dem Schaufelplattform-Vorformling oder dem Vorformling von Schaufeldeckbandzungen entspricht, und
- eine dritte Anordnung von mehreren Fadenlagen, die wenigstens lokal untereinander verbunden sind, um wenigstens einen dritten Teil des Rohlings zu bilden, welcher dem Vorformling einer Schaufelplattformverstärkung oder dem Vorformling von Abdeckspoilern des Schaufeldeckbands entspricht,
dass die Fäden der ersten Anordnung von Fadenlagen nicht mit den Fäden der zweiten Anordnung und der dritten Anordnung von Fadenlagen verbunden sind, und
dass die erste Anordnung von Fadenlagen von Fäden der zweiten Anordnung und der dritten Anordnung von Fadenlagen im Bereich des oder eines jeden zweiten Teils des Faserrohlings sowie im Bereich des oder eines jeden dritten Teils des Faserrohlings durchquert ist.

3. Verfahren nach Anspruch 2, **dadurch gekennzeichnet, dass** der Faserrohling mit einer durchgehenden zweiten Anordnung und einer durchgehenden dritten Anordnung von Fadenlagen gewebt ist und das Informbringen des Faserrohlings das Abschneiden von Teilen der zweiten Anordnung und der dritten Anordnung von Fadenlagen außerhalb des oder eines jeden zweiten Teils des Faserrohlings und des oder eines jeden dritten Teils des Faserrohlings umfasst.

4. Verfahren nach einem der Ansprüche 2 und 3, **dadurch gekennzeichnet, dass** die zweite Anordnung und die dritte Anordnung von Fadenlagen die erste Anordnung von Fadenlagen in der gleichen Richtung durchqueren.

5. Verfahren nach einem der Ansprüche 2 und 3, **dadurch gekennzeichnet, dass** die zweite Anordnung und die dritte Anordnung von Fadenlagen die erste Anordnung von Fadenlagen in entgegengesetzten Richtungen durchqueren.

6. Verfahren nach einem der Ansprüche 1 bis 5, **dadurch gekennzeichnet, dass** in dem ersten Teil des Faserrohlings und in einer Richtung, die derjenigen entspricht, welche sich entlang des Profils eines Blattes mit variabler Dicke in der herzustellenden Schaufel erstreckt, die Anzahl an Fadenlagen in der ersten Anordnung von Fadenlagen konstant ist.

7. Verfahren nach Anspruch 6, **dadurch gekennzeichnet, dass** die Fäden der ersten Anordnung von Fadenlagen eine variable Nummer aufweisen.

8. Verfahren nach einem der Ansprüche 6 und 7, **dadurch gekennzeichnet, dass** die Fadendichte der Fäden der ersten Anordnung von Fadenlagen variabel ist.

9. Verfahren nach einem der Ansprüche 1 bis 8, **dadurch gekennzeichnet, dass** durch dreidimensionales Weben ein Band mit einer Folge von Faserrohlingen hergestellt wird.

10. Verfahren nach einem der Ansprüche 1 bis 9, **dadurch gekennzeichnet, dass** die Rohlinge so gewebt sind, dass ihre Längsrichtung der in Schussrichtung verlaufenden der herzustellenden Schaufeln entspricht.

11. Verfahren nach einem der Ansprüche 1 bis 9, **dadurch gekennzeichnet, dass** die Rohlinge so gewebt sind, dass ihre Längsrichtung der in Kettrichtung verlaufenden der herzustellenden Schaufeln entspricht.

12. Turbomaschineschaufel (10) aus Verbundwerkstoff mit einer durch dreidimensionales Weben von Fäden erhaltenen und durch eine Matrix verdichteten Faserverstärkung, wobei die Schaufel einen Blatt und Schaufelfuß bildenden ersten Teil (102) umfasst, der ein einziges Teil bildet
mit wenigstens einem eine Plattform oder Schaufeldeckbandzungen bildenden zweiten Teil (104), und
mit wenigstens einem eine Plattformverstärkung oder einen Vorformling von Abdeckspoilern des Schaufeldeckbands bildenden dritten Teil (106),
wobei die Faserverstärkungsteile, welche dem ersten, dem zweiten und dem dritten Teil der Schaufel entsprechen, wenigstens teilweise gegenseitig überlappt sind, wobei Fäden des ersten Faserverstärkungsteils in den zweiten Faserverstärkungsteil eindringen.

13. Schaufel nach Anspruch 12, **dadurch gekennzeichnet, dass** sie aus Keramikmatrix-Verbundwerkstoff besteht.

14. Schaufel nach einem der Ansprüche 12 und 13, **dadurch gekennzeichnet, dass** Fäden, die den Teil der Faserverstärkung bilden, welcher dem zweiten und dem dritten Teil der Schaufel entspricht, den Teil der Faserverstärkung durchqueren, welcher dem ersten Teil der Schaufel entspricht.

15. Schaufel nach einem der Ansprüche 12 bis 14, **dadurch gekennzeichnet, dass** das Blatt der Schaufel ein Profil mit variabler Dicke aufweist, entlang dessen der dem ersten Teil der Schaufel entsprechende Faserverstärkungsteil eine konstante Anzahl an Fadenlagen hat, die sich in der Längsrichtung der Schaufel erstrecken und eine variable Nummer und/oder eine variable Fadendichte aufweisen.

16. Schaufel nach einem der Ansprüche 12 bis 14, **dadurch gekennzeichnet, dass** das Blatt der Schaufel ein Profil mit variabler Dicke aufweist, entlang dessen der dem ersten Teil der Schaufel entsprechende Faserverstärkungsteil eine veränderliche Anzahl an Fadenlagen hat, die sich in der Längsrichtung der Schaufel erstrecken.

17. Turbomaschine, die mit wenigstens einer Schaufel (10) nach einem der Ansprüche 12 bis 16 oder hergestellt nach dem Verfahren von einem der Ansprüche 1 bis 11 ausgestattet ist.

## Claims

1. A method of fabricating a turbine engine blade (10) out of composite material comprising fiber reinforcement densified by a matrix, the method comprising:
• performing three-dimensional weaving to make a single-piece fiber blank (100);
• shaping the fiber blank to obtain a single-piece fiber preform (200) having a first portion (102) forming a preform for a blade root and an airfoil, at least one second portion (104) forming a preform for a blade inner platform or for wipers of a blade outer platform, and at least one third portion (106) forming a preform for reinforcing a blade inner platform or for overhangs of a blade outer platform; and
• densifying the fiber preform with a matrix in order to obtain a composite material blade having fiber reinforcement constituted by the preform and densified by the matrix, and forming a single piece with an inner and/or outer platform(s) incorporated therein.

2. A method according to claim 1, **characterized in that**, in the longitudinal direction corresponding to the longitudinal direction of the fiber blank that is to be fabricated, the fiber blank comprises:
• a first set of a plurality of yarn layers that are linked together to form a first portion of the blank corresponding to the blade root and airfoil preform;
• a second set of a plurality of yarn layers that are linked together at least locally to form at least a second portion of the blank corresponding to the blade inner platform preform or to the blade outer wiper preform; and
• a third set of a plurality of yarn layers that are linked together at least locally to form at least a third portion of the blank corresponding to the blade inner platform reinforcement preform or to the blade outer platform overhang preform;
**in that** the yarns of the first set of yarn layers are not linked with the yarns of the second and third sets of yarn layers; and
**in that** the first set of yarn layers has yarns of the second and third sets of yarn layers crossing through the or each second portion of the fiber blank and through the or each third portion of the fiber blank.

3. A method according to claim 2, **characterized in that** the fiber blank is woven with second and third continuous sets of yarn layers and the shaping of the fiber blank includes eliminating portions of the second and third sets of yarn layers that lie outside the or each second fiber blank portion and the or each third fiber blank portion by cutting them off.

4. A method according to claim 2 or claim 3, **characterized in that** the second and third sets of yarn layers cross through the first set of yarn layers in the same direction.

5. A method according to claim 2 or claim 3, **characterized in that** the second and third sets of yarn layers cross through the first set of yarn layers in opposite directions.

6. A method according to any one of claims 1 to 5, **characterized in that**, in the first portion of the fiber blank and in the direction that corresponds to the direction along which the profile of a varying-thickness airfoil extends in the blade that is to be fabricated, the number of yarn layers in the first set of yarn layers is constant.

7. A method according to claim 6, **characterized in that** the yarns of the first set of yarn layers are of varying weight.

8. A method according to claim 6 or claim 7, **characterized in that** the thread count of the yarns of the first set of yarn layers varies.

9. A method according to any one of claims 1 to 8, **characterized in that** three-dimensional weaving is used to make a strip comprising a succession of fiber blanks.

10. A method according to any one of claims 1 to 9, **characterized in that** the blanks are woven with their longitudinal direction that corresponds to the direction of the blades that are to be fabricated extending in the weft direction.

11. A method according to any one of claims 1 to 9, **characterized in that** the blanks are woven with their longitudinal direction that corresponds to the direction of the blades that are to be fabricated extending in the warp direction.

12. A turbine engine blade (10) made of composite material comprising fiber reinforcement obtained by three-dimensional weaving of yarns and densified by means of a matrix, the blade comprising a first portion (102) constituting a root and airfoil of the blade and that is formed integrally with:
at least one second portion (104) constituting a blade inner platform or wipers of a blade outer platform; and
at least one third portion (106) constituting inner platform reinforcement or a preform for overhangs of a blade outer platform;
the fiber reinforcement portions corresponding to the first, second, and third blade portions being mutually interleaved at least in part with the yarns of the first portion of fiber reinforcement penetrating into the second portion of fiber reinforcement.

13. A blade according to claim 12, **characterized in that** it is made of ceramic matrix composite material.

14. A blade according to claim 12 or claim 13, **characterized in that** the yarns constituting the portion of the fiber reinforcement that corresponds to the second and third portions of the blade cross through the portion of the fiber reinforcement that corresponds to the first portion of the blade.

15. A blade according to any one of claims 12 to 14, **characterized in that** the blade airfoil has a profile of varying thickness along which the fiber reinforcement portion corresponding to the first blade portion has, in the longitudinal direction of the blade, a constant number of layers of yarns that are of varying weight and/or thread count.

16. A blade according to any one of claims 12 to 14, **characterized in that** the blade airfoil has a profile of varying thickness along which the fiber reinforcement portion corresponding to the first portion of the blade has a varying number of yarn layers extending in the longitudinal direction of the blade.

17. A turbine engine fitted with at least one blade (10) according to any one of claims 12 to 16 or fabricated using the method according to any one of claims 1 to 11.
